# EUROPEAN PATENT SPECIFICATION

(11) **EP 2 281 485 B1**
(45) Date of publication and mention of the grant of the patent: **22.06.2011**
(21) Application number: 10425045.1
(22) Date of filing: 22.02.2010
(51) Int. Cl.: A47C 7/02, A47C 27/14, B29C 39/10

(54) **Multi-layer body for padding mattresses, chairs and the like and method for its manufacture**
Mehrschichtiger Körper zum Polstern von Matratzen und dergleichen sowie Herstellungsverfahren dafür
Corps multicouche pour rembourrer des matelas, des chaises et similaires et son procédé de fabrication

(30) Priority: 30.07.2009 IT RM20090407
(43) Date of publication of application: 09.02.2011
(73) Proprietor: Ovattificio Fortunato S.r.L., 84092 Bellizzi (SA) (IT)
(72) Inventor: Fortunato, Pasquale, 84092 Bellizi (SA) (IT)
(74) Representative: Lanzoni, Luciano

(56) References cited:
- EP-A1- 1 529 618
- EP-A1- 1 700 783
- EP-A1- 1 762 211
- WO-A1-2005/046988
- BE-A6- 1 013 017

## Description

The present invention relates to a multi-layer body with three-dimensional fabric for padding mattresses, chairs and the like and a related method for manufacturing said body.

In particular, the present invention relates to a multi-layer body, in which use of a three-dimensional fabric, advantageously utilised for mattresses, is prevalent; all enclosed in a polyurethane foam frame.

Such multi-layer bodies ave known for example from EP 1 762 211 A1.

Manufactured items made of flexible or visco-elastic polyurethane differ from other padding material because of their high degree of elastic recovery after compression. As is well known, such items are manufactured by a method of mixing the base components of polyurethane, and subsequently polymerising the mixture thus obtained. Polyurethane items are also coupled to appropriate support elements, to obtain a multi-layer body.

Generally, the support elements are made of a textile material less elastic than polyurethane, able to facilitate the applications of the manufactured item (by sewing, riveting, gluing, etc.) onto other surfaces, without having deformations and damages to the item itself.

The textile support elements can be applied to polyurethane items by gluing with appropriate spray glues. Alternatively, hot processes may be employed, which require heating the polyurethane surface to be associated to the textile support, and the subsequent calendering to define a stable contact between the support and the polyurethane. The support elements can also be coupled to the manufactured item to provide it with greater stiffness or to differentiate the elastic recovery regions.

However, multi-layer bodies for padding, of the type described above present some important drawbacks.

A first important drawback relates to the poor adaptability to shapes and to the poor density of the multi-layer body. Although the polyurethane item has a high degree of elastic recovery, it is easily deformable when it is subjected to compression. Therefore, when the item is compressed, it is crushed, thereby determining a "sinking" effect of the body of the user lying on the mattress.

An additional important drawback is given by the poor transpiration capability of the polyurethane material. Note that the polyurethane item, notoriously not very porous, is directly in contact with the user's body, preventing its transpiration.

Therefore, the surface of the user's body in contact with the mattress remains in a condition of high dampness, with the consequent disadvantages in terms of the hygiene of the mattress itself.

Yet another drawback is given by the method for coupling the individual layers, which is particularly long, costly and laborious.

As described above, the textile support elements are anchored to the polyurethane items by gluing with appropriate spray-on glues. This method, therefore, requires a particularly long processing time, due to the times needed for the dispensing and activation of the glue.

Even in the case of hot coupling methods, numerous complicated operations are required of heating the polyurethane surface to be associated to the textile support, and of subsequent calendering to define the anchoring between the support and the polyurethane.

An object of the present invention is to solve the problems encountered in the prior art, proposing a multi-layer body for the padding of mattresses, chairs or the like, that is able to overcome the aforementioned drawbacks.

In particular, an object of the present invention is to provide a multi-layer able to adapt to the user's shape and able not to be excessively deformed as a result of the compression given by the user's body.

An additional object of the present invention is to make available a multi-layer body that is able to improve comfort conditions, increasing the transpiration ability of the surfaces in direct contact with the user's body.

Another object of the present invention is to make available a finished multi-layer body, already having a predefined shape and ready to be used, without having to proceed with additional superficial work processes, especially at the edges of the body.

Yet another object of the present invention is to make available a method for manufacturing the multi-layer body that is simple, with low costs and that at the same time assures an efficient anchoring of the individual layers comprising the body.

These objects and others as well, which shall become more readily apparent in the course of the following description, are substantially achieved by multi-layer body comprising the characteristics expressed in one or more of the appended claims.

Additional characteristics and advantages shall become more readily apparent from the detailed description of a preferred, but not exclusive, embodiment of a multi-layer body according to the present invention. Said description shall be provided below with reference to the accompanying drawings, provided solely by way of non limiting indication, in which:
- figure 1 shows a perspective, partially sectioned view of a multi-layer body for the padding of mattresses, chairs or the like, according to the present invention;
- figures 2 to 6 respectively show perspective views of operating steps in the manufacturing of the item according to the present invention; and
- figure 7 shows a sectioned and partially enlarged view of a construction detail of figure 5.

With reference to the accompanying figures, the number 1 indicates in its entirety a multi-layer body for the padding of mattresses, chairs or the like, according to the present invention.

In particular, the body 1 comprises a layer 2 of flexible or visco-elastic polyurethane, preferably obtained, as shall be better described below, from a 4,4'-methylenediphenyl diisocyanate compound, a Polyol mixture and a catalyst.

Advantageously, the layer 2 made of flexible or visco-elastic material has a density between 15 and 70 kg/m3 depending on whether it is a flexible or visco-elastic polyurethane. In particular, said layer 2 can be formed by multiple polyurethane layers with different values of density/flexibility.

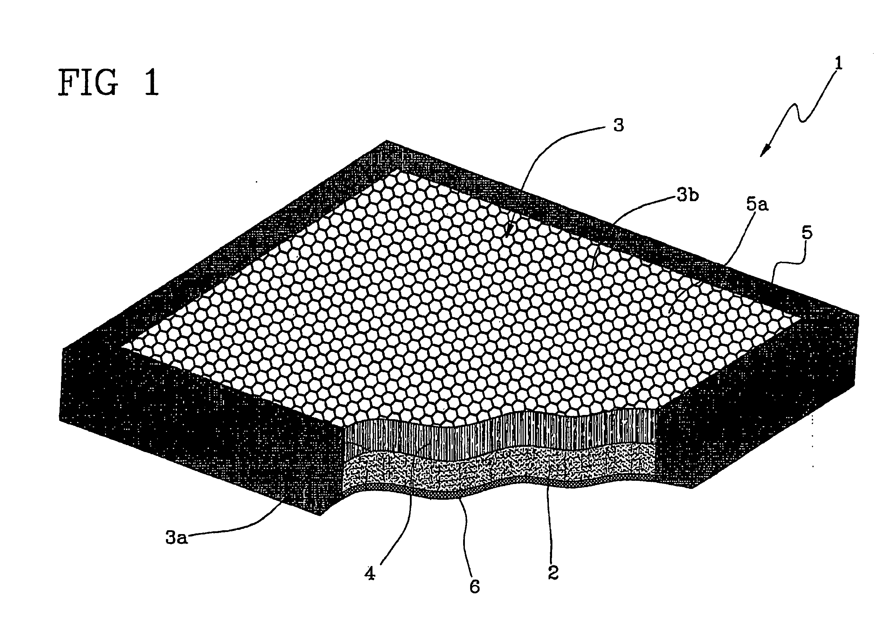

Additionally, the thickness of the layer 2, as well as the chemical composition, may be any, according to the various usage requirements. The layer 2 presents, on both surfaces, preferably circular through holes, to allow the passage of air, schematically illustrated with a dashed line in figure 1.

According to another embodiment, not shown in the figures for the sake of simplicity, the layer 2 can be constituted by a layer of springs, which may or may not be enclosed in bags, or by micro springs positioned between two layers of felt, fabric or polyurethane, also preferably holed. The body 1 advantageously also comprises at least one support layer 3, constituted by a three-dimensional fabric, which is already the subject of a previous patent by the same Applicant.

In particular, the three-dimensional fabric constituting the support layer 3 presents a first surface 3a coupled to the layer 2 made of flexible or visco-elastic polyurethane, and a second surface 3b opposite to the first surface 3a and parallel thereto.

In particular, the support layer 3, i.e. said three-dimensional fabric, presents a plurality of filaments 4 interposed between the surfaces 3a, 3b to distance the surfaces 3a, 3b from each other.

In this situation, each filament 4 develops substantially in a direction that is substantially transverse to the plane of development of said surfaces 3a, 3b. In other words, the filaments 4 present a prevalently vertical orientation, i.e. along a direction of compression acting on the body 1.

Advantageously, each filament 4 is made of elastic material. The thickness of the support layer 3, the three-dimensional fabric is preferably between 10 and 50 mm.

The filaments 4 are not described in detail with respect to their own composition and to their elastic recovery, because they are already known as components of the three-dimensional fabric.

As is better illustrated in figure 1, each surface 3a, 3b of the support layer 3 comprises a mesh fabric 5a, preferably with wide meshes, in which the ends 4a of the filaments 4 are anchored.

It should be noted that the fabrics 5a of the first and second surface 3a, 3b constitute a support frame of the filaments 4 able to maintain the filaments 4 substantially perpendicular to the surfaces 3a, 3b.

It should also be noted that the support layer 3, subjected to compression, determines the stress of the filaments 4 which fold onto themselves, deforming elastically. In this situation, the filaments 4 behave as individual springs, and maintain the surfaces 3a, 3b mutually distanced allowing the circulation of air.

As a result of the release from compression of the layer 3, the filaments 4 return to the original condition by elastic effect, mutually distancing the surfaces 3a, 3b and introducing more air between the surfaces.

Moreover, the body 1 presents a base layer 6 coupled to the layer 2 of flexible or visco-elastic polyurethane, at the opposite side from the support layer 3. The layer 6 also advantageously presents circular holes on both surfaces able to allow the circulation of air.

In particular, the base layer 6 can be of any kind, able to assure the function of support for the polyurethane layer 2. Moreover, the base layer 6 is selected as a function of the various application needs of the multi-layer body 1. For example, the base layer can be obtained from a layer of felt constituted by natural and synthetic textile fibres mixed together through known methodologies of carding and subsequent needle punching.

Alternatively, the layer 6 can be constituted by one or more plates made of polyurethane foam, having different density and thickness.

The multi-layer body 1 further comprises an outer frame 5, extending along the entire peripheral development of the body 1 itself, in order stably to anchor together the polyurethane later 2, the support layer 3, the base layer 6.

In particular, the outer frame 5 is constituted by a single body and it has substantially annular conformation adhering to the peripheral edges of the layers constituting the body 1.

In the solution illustrated purely by way of non limiting example in the accompanying figures, the outer frame 5 presents substantially rectangular peripheral development. In this way, the entire multi-layer body 1 presents a parallelepiped structure with rectangular section. However, it should be specified that the outer frame 5 can have any conformation according to the shape and the use of the body 1. Advantageously, it should be noted that the frame 5 is partially housed within the polyurethane layer, in the layer 3, and in the base layer 6. In other words, the permeable structure of the polyurethane layer 2 of the support layer 3 and of the base layer 6, enables the frame 5 partially to penetrate inside said layers, anchoring them to each other.

Preferably, the outer frame 5 is made of flexible polyurethane and it is distributed in liquid form to be solidified subsequently.

Consequently, the distributed outer frame 5 of liquid polyurethane permeates at least partially within the filaments 4 that constitute the three-dimensional fabric, anchoring, once it is solidified, to the filaments 4.

It should also be specified that the frame 5 can be employed regardless of the number and of the structure of each individual layer. The frame 5 encloses all the superposed layers that constitute the body 1 maintaining a compact structure.

The multi-layer body 1 described above in a prevalently structural sense is obtained by the method described below.

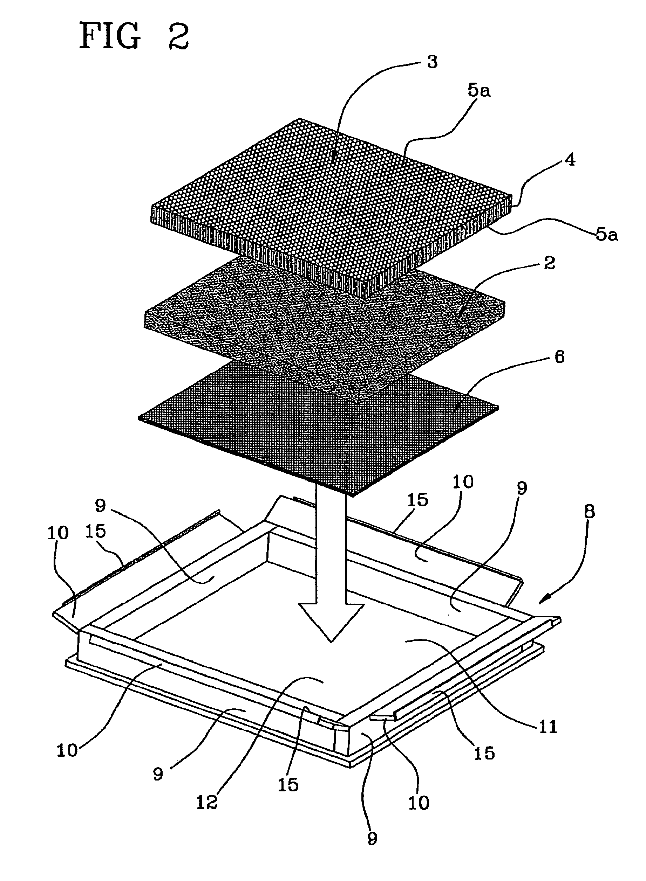

In the first place, as is better illustrated in figure 2, a lateral frame 8 is provided, defining an inner housing compartment 11.

In particular, the frame 8 presents a base 12 and four lateral walls 9, associated above the base 12 and positioned to constitute a frame with substantially rectangular development. However, it should be specified that the structure of the frame 8 can be of any kind according to the shape to be attributed to the multi-layer body 1 and to its use.

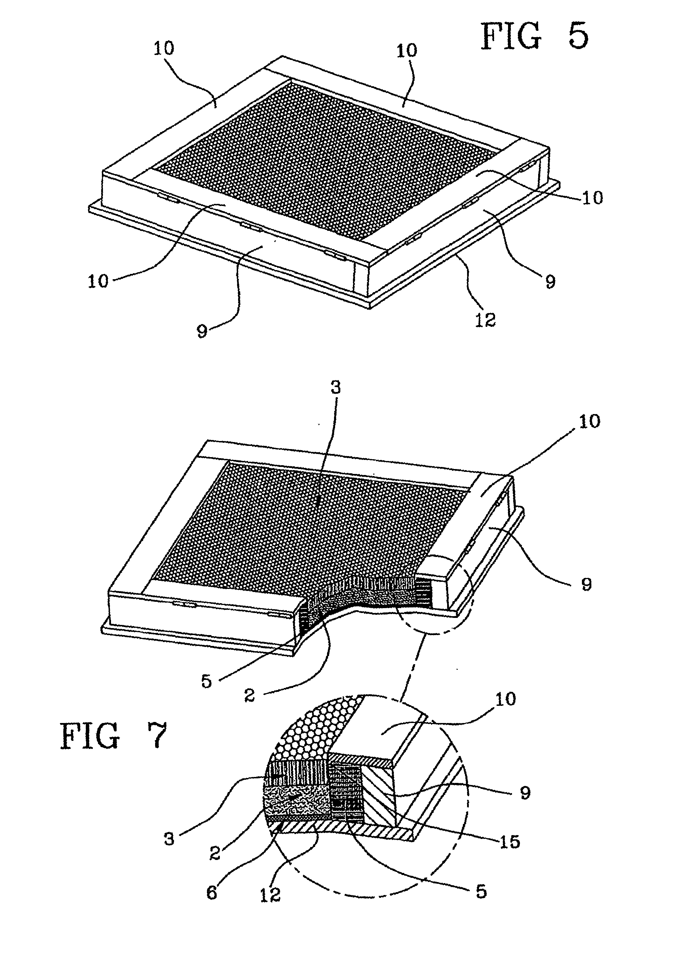

Each lateral wall 9 is superiorly provided with a lid 10 hinged to the respective lateral wall 9 to be movable between an open position (figure 2) in which it is outside the aforementioned compartment 11, and a closed position (figure 5) in which it is overturned inside the compartment 11 and above the base 12.

Still with reference to figure 2, in which the walls 9 are in the respective open position, all the layers constituting the body 1 are inserted in sequence into the compartment 11.

In other words, in the example of figure 2 at first the base layer 6 is inserted, which constitutes the lower part of the body 2, and above it the layer 2 of flexible or visco-elastic polyurethane, or variously constituted as described above, is inserted. Above the layer 2 is positioned at least one support layer made of three-dimensional fabric 3 which constitutes the most superficial and externally visible area of the body 1.

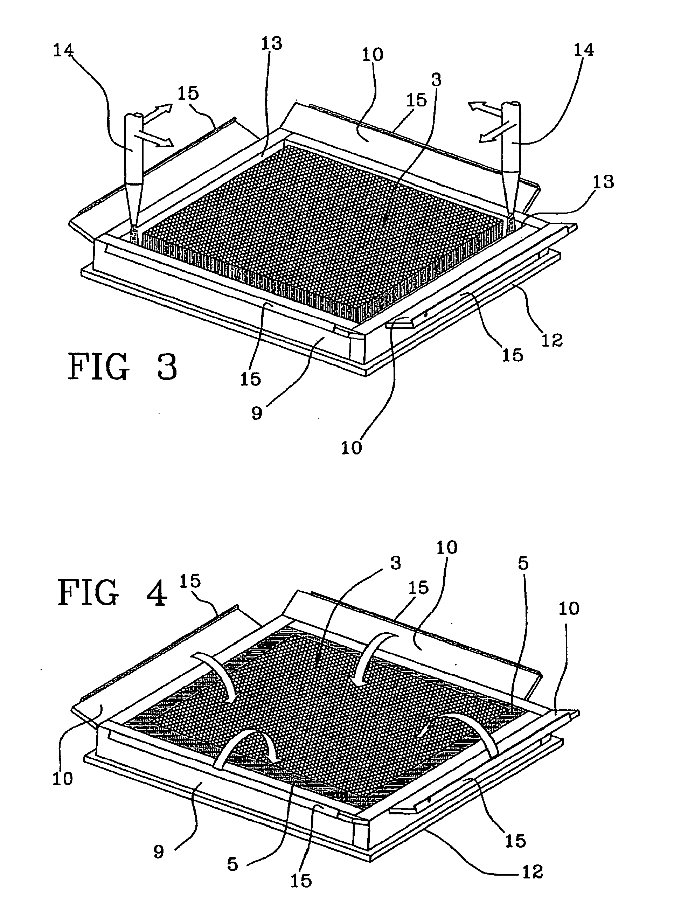

As shown in figure 3, the layers stacked inside the compartment 11 define a peripheral gap 13 limited between the lateral walls 9 of the frame 8 and the lateral edges of the layer 2, of the support layer 3 and of the base layer 6.

Inside the gap 13 is then distributed a material of flexible polyurethane, able to constitute the aforementioned outer frame 5.

In particular, a pipeline is provided from which the polyurethane in liquid form is poured (see outline in figure 3), into the gap 13. Preferably, the pipeline is movable above and along the entire development of the gap 13 to distribute homogeneously the material made of polyurethane in liquid form.

During this step, the polyurethane material partially penetrates into the permeable structures of the layers to serve as an adhesive of the layers themselves.

At this point, as shown in figure 4, the lids 10 are overturned in the respective closed position above the gap 13. In this way, a closed mould is defined within which the solidification process of the polyurethane material begins. As shown in the detail of figure 7, each lid 10 constitutes an upper wall able to give shape to the frame 5. Moreover, each lid 10 presents a projecting edge 15 that goes to bear on the outer side of the layer 3. In this way, the polyurethane material in the liquid state remains constrained within the gap 13, preventing it from escaping above the visible layer 3.

It should also be noted that the lids 10 remain distanced from the base 12 in order not to compress the frame 5 and the layers inserted inside the compartment 11. In other words, the presence of the lids defines solely the shape and the outer structure of the finished frame 5.

During the solidification of the polyurethane material, the part of the polyurethane material that permeates in the layers 2, 3 and 6 maintains said layers stably anchored to each other, serving as an adhesive.

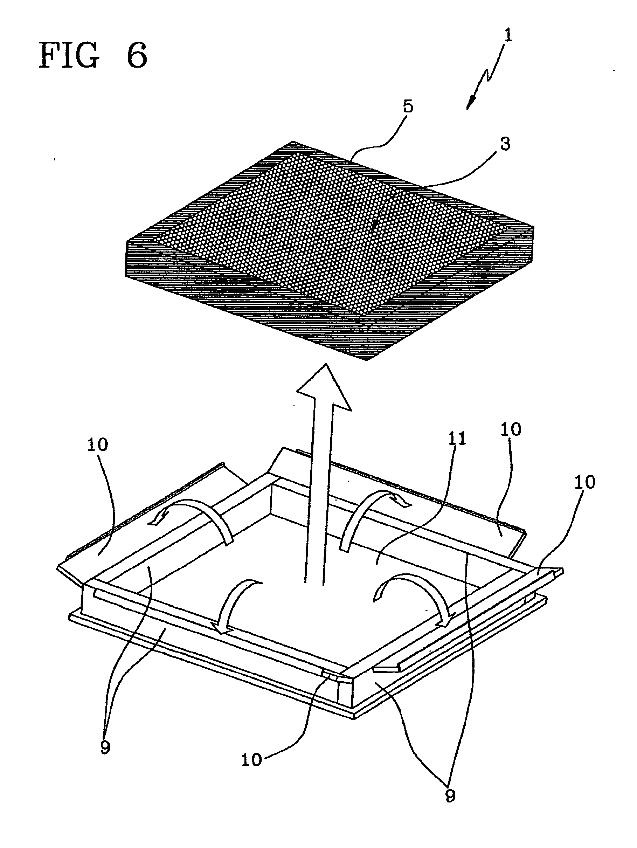

To prevent an excessive diffusion of the liquid polyurethane, before its solidification, inside the support layer 3, between its filaments 4, the lateral outer edges of the layer 3 may be, even just partially, covered or coated with polyurethane strips or fabric ribbons or the like. Subsequently, when the polyurethane material is completely solid, the lids 10 are reopened (figure 6) to free the gap 13 and extract the finished multi-layer body.

The invention achieves important advantages.

First of all, the multi-layer body 1 presents an "anti-sinking" effect, enabling to obtain support for the user's body, adapting to its shape and weight.

This advantage is provided by the presence of the filaments 4 which, as specified above, serve as springs, compressing under the effect of the user's weight.

The 100% elastic recovery capability gives the body 1 resistance to mechanical stress and hence an enhanced durability of the body 1 itself. Moreover, the presence of the three-dimensional fabric of the support layer 3 determines a continuous renewal of air, which prevents the formation of mildews, acarids and bacteria. It should also be noted that the separating motion of the surfaces 3a, 3b imposed by the filaments 4 favours the passage of air in the gap 3, eliminating the residual humidity inside the multi-layer body 1, with the consequent advantages in terms of hygiene of the surfaces in contact with the user's body.

Moreover, the presence of the polyurethane frame 5 assures the coupling of the three-dimensional fabric with the other layers of the body 1, without using seams or other external anchoring elements.

## Claims

1. Multi-layer body for the padding of mattresses, chairs or the like, comprising:
at least one layer (2) constituted by one or more layers of flexible or viscous-elastic polyurethane or by springs that may be bagged or not, said at least one layer (2) is positioned between a base layer (6) and a support layer (3) of felt, fabric or polyurethane; wherein said at least one support layer (3) is made of three-dimensional fabric presenting a first surface (3a) coupled to the layer (2) and a second surface (3b) opposite to the first surface (3a) and it further comprises an outer frame (5), **characterised in that** said outer frame is extending along the entire peripheral development of all the layers of the multi-layer body, in order stably to anchor the layer (2) with the support layer (3) made of three-dimensional fabric.

2. Body as claimed in the previous claim, **characterised in that** said outer frame (5) presents substantially annular conformation to enclose the lateral portions of the layer (2) and of the support layer (3).

3. Body as claimed in claim 1 or 2, **characterised in that** said outer frame (5) is made of flexible polyurethane and in a single body.

4. Body as claimed in any of the previous claims, **characterised in that** said support layer (3) made of three-dimensional fabric further comprises a plurality of filaments (4) interposed between the first and second surface (3a, 3b) to distance the surfaces (3a, 3b) from each other; said outer frame at the outer edge of said support layer (3) developing at least partially within said filaments (4).

5. Body as claimed in the previous claim, **characterised in that** each filament (4) develops in a direction that is substantially transverse to the plane of development of said surfaces (3a, 3b).

6. Body as claimed in any of the previous claims, **characterised in that** each filament (4) is made of elastic material.

7. Body as claimed in any of the previous claims, **characterised in that** each surface (3a, 3b) of the support layer (3) made of three-dimensional fabric comprises a meshed fabric (5a); said meshed fabric (5a) of the second surface (3b) being positioned externally in view.

8. Body as claimed in any of the previous claims, **characterised in that** it further comprises a base layer (6) coupled to the layer (2) at the opposite part relative to the support layer (3); said outer frame (5) developing at the peripheral edge of said base layer (6) to associate stably the layer (6) to the layer (2).

9. Body as claimed in any of the previous claims, **characterised in that** said layer 2 and said base layer 6 are provided with through hole to allow the passage of air.

10. Body as claimed in the previous claim, **characterised in that** said base layer (6) comprises a layer of felt (7).

11. Body as claimed in claim 8, **characterised in that** said base layer (6) comprises a layer of polyurethane sponge (8).

12. A method for manufacturing a multi-layer body for padding of mattresses, chairs or the like, according to any of the previous claims, **characterised in that** it comprises the steps of:
- readying a lateral frame (8), defining an inner housing compartment (11);
- inserting at least one layer (2) and at least one support layer (3) of three-dimensional fabric into said housing compartment (11) to define a peripheral gap (13) defined between at least one lateral wall (9) of said frame (8) and the lateral edges of the layer (2) and of the support layer (3) of three-dimensional fabric, and
- distributing a material of flexible polyurethane in said gap (13) to define an outer frame (5).

13. Method as claimed in the previous claim, **characterised in that** said step of distributing the polyurethane material is performed spraying said material in liquid form inside the gap (13).

14. Method as claimed in claim 13, **characterised in that** it further comprises, subsequently to the step of distributing the polyurethane material, the step of closing the gap by means of upper lids (10) of the lateral frame (8) defining a closed mould within which the polyurethane material is solidified.

15. Method as claimed in the previous claim, **characterised in that** it further comprises, subsequently to the step of closing the gap (13) and of solidifying the polyurethane material, the step of opening the gap by actuating the upper lids (10) to extract the multi-layer body (1).

16. Method as claimed in claim 13 or 14, **characterised in that** said step of solidifying the polyurethane material within the gap comprises the sub-step of anchoring the layer (2) of flexible or viscous-elastic polyurethane with the support layer (3) of three-dimensional fabric

## Patentansprüche

1. Mehrschichtiger Körper zum Polstern von Matratzen, Stühlen oder dergleichen, umfassend:
mindestens eine Schicht (2), bestehend aus einer oder mehreren Schichten eines flexiblen oder viskoelastischen Polyurethans oder aus Federn, die eingepackt sein können oder nicht, wobei die genannte mindestens
eine Schicht (2) zwischen einer Basisschicht (6) und einer Trageschicht (3) aus Filz, Gewebe oder Polyurethan positioniert ist; wobei die genannte mindestens eine Trageschicht (3) aus einem dreidimensionalen Gewebe besteht, das eine erste Oberfläche (3a), verbunden mit der Schicht (2), und
eine zweite Oberfläche (3b), die der ersten Oberfläche (3a) gegenüber angeordnet ist, aufweist, und er zudem einen äußeren Rahmen (5) umfasst, **dadurch gekennzeichnet, dass** sich der genannte äußere Rahmen am gesamten Umfangsverlauf aller Schichten des mehrschichtigen Körpers erstreckt, um die Schicht (2) stabil mit der aus einem dreidimensionalen Gewebe bestehenden Trageschicht (3) zu verankern.

2. Körper nach dem vorhergehenden Anspruch, **dadurch gekennzeichnet, dass** der genannte äußere Rahmen (5) im Wesentlichen eine Ringform aufweist, um die seitlichen Abschnitte der Schicht (2) und der Trageschicht (3) zu umschließen.

3. Körper nach Anspruch 1 oder 2, **dadurch gekennzeichnet, dass** der äußere Rahmen (5) aus flexiblem Polyurethan besteht und in einem einzelnen Körper gefertigt ist.

4. Körper nach einem der vorhergehenden Ansprüche, **dadurch gekennzeichnet, dass** die genannte, aus dreidimensionalem Gewebe bestehende Trageschicht (3) zudem eine Vielzahl von Filamenten (4) umfasst, die zwischen der ersten und zweiten Oberfläche (3a, 3b) eingesetzt sind, um die Oberflächen (3a, 3b) voneinander zu distanzieren; wobei sich der genannte äußere Rahmen an der äußeren Kante der genannten Trageschicht (3) mindestens teilweise in den genannten Filamenten (4) erstreckt.

5. Körper nach einem der vorhergehenden Ansprüche, **dadurch gekennzeichnet, dass** jedes Filament (4) in eine Richtung verläuft, die im Wesentlichen quer zur Verlaufsebene der genannten Oberflächen (3a, 3b) angeordnet ist.

6. Körper nach einem der vorhergehenden Ansprüche, **dadurch gekennzeichnet, dass** jedes Filament (4) aus elastischem Material besteht.

7. Körper nach einem der vorhergehenden Ansprüche, **dadurch gekennzeichnet, dass** jede Oberfläche (3a, 3b) der aus dreidimensionalem Gewebe bestehenden Trageschicht (3) ein netzartiges Gewebe (5a) umfasst; wobei das genannte netzartige Gewebe (5a) der zweiten Oberfläche (3b) auf der Außenseite in Sicht positioniert ist.

8. Körper nach einem der vorhergehenden Ansprüche, **dadurch gekennzeichnet, dass** er zudem eine Basisschicht (6) umfasst, die mit der Schicht (2) an der der Trageschicht (3) gegenüberliegenden Seite verbunden ist; wobei der genannte äußere Rahmen (5) an der Umfangskante der genannten Basisschicht (6) verläuft, um die Schicht (6) stabil mit der Schicht (2) in Verbindung zu bringen.

9. Körper nach einem der vorhergehenden Ansprüche, **dadurch gekennzeichnet, dass** die genannte Schicht (2) und die genannte Basisschicht (6) mit einem Durchgangsloch versehen sind, um den Luftdurchgang zu ermöglichen.

10. Körper nach dem vorhergehenden Anspruch, **dadurch gekennzeichnet, dass** die genannte Basisschicht (6) eine Filzschicht (7) umfasst.

11. Körper nach Anspruch 8, **dadurch gekennzeichnet, dass** die genannte Basisschicht (6) eine Polyurethanschaumschicht (8) umfasst.

12. Verfahren zum Herstellen eines mehrschichtigen Körpers zum Polstern von Matratzen, Stühlen oder dergleichen nach einem der vorhergehenden Ansprüche, **dadurch gekennzeichnet, dass** es folgende Schritte umfasst:
- Vorbereiten eines seitlichen Rahmens (8), der einen inneren Aufnahmeraum (11) definiert;
- Einsetzen von mindestens einer Schicht (2) und mindestens einer Trageschicht (3) aus dreidimensionalem Gewebe in diesen Aufnahmeraum (11), um eine Umfangslücke (13) zu definieren, die zwischen mindestens einer Seitenwand (9) des genannten Rahmens (8) und den Seitenkanten der Schicht (2) und der Trageschicht (3) aus dreidimensionalem Gewebe definiert ist, und
- Verteilen eines Materials aus flexiblem Polyurethan in der genannten Lücke (13), um einen äußeren Rahmen (5) zu definieren.

13. Verfahren nach dem vorhergehenden Anspruch, **dadurch gekennzeichnet, dass** der genannte Schritt des Verteilens des Polyurethanmaterials durch das Sprühen des genannten Materials in flüssiger Form in die Lücke (13) ausgeführt wird.

14. Verfahren nach Anspruch 13, **dadurch gekennzeichnet, dass** es zudem nach dem Schritt des Verteilens des Polyurethanmaterials den Schritt des Schließens der Lücke mittels oberer Deckel (10) des seitlichen Rahmens (8) umfasst, definierend eine geschlossene Form, in der sich das Polyurethanmaterial verfestigt.

15. Verfahren nach dem vorhergehenden Anspruch, **dadurch gekennzeichnet, dass** es zudem nach dem Schritt des Schließens der Lücke (13) und des Verfestigens des Polyurethanmaterials den Schritt des Öffnens der Lücke durch das Betätigen der oberen Deckel (10) umfasst, um den mehrschichtigen Körper (1) herauszuziehen.

16. Verfahren nach Anspruch 13 oder 14, **dadurch gekennzeichnet, dass** der genannte Schritt des Verfestigens des Polyurethanmaterials in der Lücke den Unterschritt des Verankerns der Schicht (2) aus flexiblem oder viskoelastischem Polyurethan mit der Trageschicht (3) aus dreidimensionalem Gewebe umfasst.

## Revendications

1. Corps multicouche pour rembourrer des matelas, des chaises ou similaires, comprenant :
au moins une couche (2) formée d'une ou de plusieurs couches de polyuréthane souple ou viscoélastique ou de ressorts ensachés ou pas, ladite au moins une couche (2) est positionnée entre une couche de base (6) et une couche de support (3) en feutre, en tissu ou en polyuréthane ; dans lequel ladite au moins une couche de support (3a) est fabriquée en tissu tridimensionnel présentant une première surface (3a) accouplée à la couche (2) et une deuxième surface (3b) opposée à la première surface (3a) et elle comprend aussi un cadre extérieur (5), **caractérisé en ce que** ledit cadre extérieur évolue le long de tout le développement périphérique de toutes les couches du corps multicouche, afin de fixer de façon stable la couche (2) à la couche de support (3) faite en tissu tridimensionnel.

2. Corps selon la revendication précédente, **caractérisé en ce que** ledit cadre extérieur (5) présente essentiellement une forme annulaire pour entourer les parties latérales de la couche (2) et de la couche de support (3).

3. Corps selon les revendications 1 ou 2, **caractérisé en ce que** ledit cadre extérieur (5) est fabriqué en polyuréthane souple et en une seule pièce.

4. Corps selon l'une quelconque des revendications précédentes, **caractérisé en ce que** ladite couche de support (3), fabriquée en tissu tridimensionnel, comprend également une pluralité de filaments (4) interposés entre la première surface et la deuxième surface (3a, 3b) pour éloigner les surfaces (3a, 3b) l'une de l'autre ; ledit cadre extérieur, sur le bord extérieur de ladite couche de support (3), évoluant au moins partiellement à l'intérieur desdits filaments (4).

5. Corps selon la revendication précédente, **caractérisé en ce que** chaque filament (4) évolue dans une direction qui est essentiellement transversale au plan de développement desdites surfaces (3a, 3b).

6. Corps selon l'une quelconque des revendications précédentes, **caractérisé en ce que** chaque filament (4) est fabriqué en matière élastique.

7. Corps selon l'une quelconque des revendications précédentes, **caractérisé en ce que** chaque surface (3a, 3b) de la couche de support (3) fabriquée en tissu tridimensionnel, comprend un tissu résille (5a) ; ledit tissu résille (5a) de la deuxième surface (3b) étant positionné à l'extérieur de manière apparente.

8. Corps selon l'une quelconque des revendications précédentes, **caractérisé en ce qu'**il comprend aussi une couche de base (6) accouplée à la couche (2), à l'opposé de la couche de support (3) ; ledit cadre extérieur (5) évoluant sur le bord périphérique de ladite couche de base (6) pour associer, de manière stable, la couche (6) à la couche (2).

9. Corps selon l'une quelconque des revendications précédentes, **caractérisé en ce que** ladite couche 2 et ladite couche de base 6 sont dotées de trou débouchant pour permettre le passage d'air.

10. Corps selon la revendication précédente, **caractérisé en ce que** ladite couche de base (6) comprend une couche de feutre (7).

11. Corps selon la revendication 8, **caractérisé en ce que** ladite couche de base (6) comprend une couche d'éponge polyuréthane (8).

12. Procédé de fabrication d'un corps multicouche pour rembourrer des matelas, des chaises ou similaires, selon l'une quelconque des revendications précédentes, **caractérisé en ce qu'**il comprend les étapes de :
- préparer un cadre latéral (8), formant un compartiment de logement interne (11) ;
- insérer au moins une couche (2) et au moins une couche de support (3) en tissu tridimensionnel dans ledit compartiment de logement (11) pour former un interstice périphérique (13) entre au moins une paroi latérale (9) dudit cadre (8) et les bords latéraux de la couche (2) et de la couche de support (3) en tissu tridimensionnel, et
- distribuer une matière de polyuréthane souple dans ledit interstice (13) pour former un cadre extérieur (5).

13. Procédé selon la revendication précédente, **caractérisé en ce que** ladite étape de distribution de la matière polyuréthane est faite par vaporisation de ladite matière sous forme liquide à l'intérieur de l'interstice (13).

14. Procédé selon la revendication 13, **caractérisé en ce qu'**il comprend aussi, après l'étape de distribution de la matière polyuréthane, l'étape de fermer l'interstice avec des couvercles supérieurs (10) du cadre latéral (8), formant un moule fermé, à l'intérieur duquel se solidifie la matière polyuréthane.

15. Procédé selon la revendication précédente, **caractérisé en ce qu'**il comprend également, après l'étape de fermeture de l'interstice (13) et celle de solidification de la matière polyuréthane, l'étape d'ouvrir l'interstice en agissant sur les couvercles supérieurs (10) pour retirer le corps multicouche (1).

16. Procédé selon les revendications 13 ou 14, **caractérisé en ce** qua ladite étape de solidification de la matière polyuréthane à l'intérieur de l'interstice, comprend la sous-étape de fixer la couche de polyuréthane souple ou viscoélastique (2) à la couche de support (3) en tissu tridimensionnel.
